Europäisches Patentamt

European Patent Office

Office européen des brevets

(11) Publication number: **0 191 501**
**B1**

(12) **EUROPEAN PATENT SPECIFICATION**

(45) Date of publication of patent specification: **31.10.90**

(21) Application number: **86101912.3**

(22) Date of filing: **14.02.86**

(51) Int. Cl.⁵: **F 16 B 33/02, F 16 B 31/00**

(54) **An improved thread form and fastener system using the form.**

(30) Priority: **15.02.85 US 702150**

(43) Date of publication of application:
**20.08.86 Bulletin 86/34**

(45) Publication of the grant of the patent:
**31.10.90 Bulletin 90/44**

(84) Designated Contracting States:
**DE FR GB IT SE**

(56) References cited:
**DE-B-2 102 910**
**GB-A- 768 582**
**US-A-3 323 402**
**US-A-4 040 327**
**US-A-4 338 054**

**DD-Handbook "Fachwissen des Ingenieurs"**
**1974, Seiten 125/126**

(73) Proprietor: **WING, George Seabrook**
**531 Esplanade-Apt. 515**
**Redondo Beach California 90277 (US)**

(72) Inventor: **WING, George Seabrook**
**531 Esplanade-Apt. 515**
**Redondo Beach California 90277 (US)**

(74) Representative: **Patentanwälte Grünecker,**
**Kinkeldey, Stockmair & Partner**
**Maximilianstrasse 58**
**D-8000 München 22 (DE)**

Courier Press, Leamington Spa, England.

EP 0 191 501 B1

**Description**

The invention refers to a threaded fastener with a buttress type thread which has a load-bearing flank and a nonload-bearing flank.

Threaded fasteners are, of course, well known, for instance as male threaded elements, variously known as a "screw," "bolt," or "pin," and mating female threaded elements, variously known as a "nut" or "collar;" a combination of male threaded element and a female threaded element is often referred to as a "fastener system." (In this specification, a male threaded element will usually be referred to as a "screw" and a female threaded element will be referred to as a "nut."

A buttress thread avoids high stresses along the pressure flank of the thread in a radial direction, and have been used for that reason. A buttress thread has the pressure or load-bearing thread flank nearly perpendicular to the axis of the thread, and so the flank is not subject to high radial stresses. Buttress threads are for instance disclosed in East German book "Fachwissen des Ingenieurs" VEB Fachbuchverlag Leipzig, Volume I, 1974, pages 125/126. This publication discloses a row of standarised, graduated dimensions. The maximum diameter, the root diameter as well as the pitch are listed. The maximum diameter increases step by step while the pitch as well as the difference between the maximum and the root diameters remains constant over three successive steps of increasing maximum diameter. In addition, the rows of maximum diameters may be combined with three alternative rows of differently graduated pitches ranging from fine to coarse. The pressure flank is at an angle of inclination of about 3° to avoid cutter interference during milling of the thread. Some inclination would be necessary to avoid die interference in roll formed threads. Buttress threads often are used in breach assemblies of large guns, airplane propeller hubs, and columns for hydraulic presses.

The thread forms of complementary male and female threads have the same axial lengths at corresponding radii, so the axial distances at the root of both are equal and the distances across the thread crests of both are equal. Thus thread failure in the standard buttress thread always depends on the weakest material; the collar is generally the weaker material, and in extreme cases thread failure will occur at the root of the collar thread and the pin thread will not fail at all. Another difficulty with the known thread forms is that there is no attempt to correlate thread height with fastener diameter so that the strength performance of a thread is proportional to fastener diameter. Instead, thread height is made a linear function of the distance between successive thread convolutions of a fastener, the "pitch;" and pitch varies somewhat arbitrarily between different fastener diameters. (Strictly, there is only one thread in a fastener, but it is common to call the successive manifestations of the single thread seen in axial cross-section "threads", these manifestations will often be called "thread forms" in this specification).

The requirements of the threaded fastener systems are stringent in sophisticated threaded fastener systems used in aerospace. An important requirement of an aerospace fastener is a known and repeatable pre-load: the clamp-up force on the sheets held together by the fastener system. This pre-load correlates directly with the torque that sets the fastener. Nonetheless, a lot of the setting torque in a typical fastener system is not used in developing pre-load but instead is used in overcoming friction. A typical 60° included angle thread experiences considerable friction between the threads of the collar and the pin because the load across the load-bearing flanks is greater than the pre-load because of the multiplying effect of the thread geometry, and accordingly driving load has to be sufficiently high to take into account the added friction in addition to the desired pre-load. The reduction of this parasitic friction has the advantages of reducing the driving load, the requirements of the setting tools, and increasing the accuracy of the pre-load. Fatigue life is critical in a fastener system for obvious reasons.

Many fastener systems have a thread lock to keep the collars from loosening on the pins. One form of thread lock uses deformed threads of the collar to increase friction between the collar and the pin threads in a localized area. Substantial hoop stress on the collar imparted through the threads of the pin can reduce or eliminate the effect of the thread lock because the hoop stress overcomes the deformation in the collar and plasticially deforms the thread lock so that it looses its ability to perform its function.

Summary of the invention

The present invention provides a unique thread form having as one characteristic a constant relationship of the radial cross-sectional area of the thread with respect to the cross-sectional area at the fastener core diameter of substantially 30%.

Generally, the present invention contemplates a root diameter substantially equal to the product of the square root of 0.7 and the core diameter of the fastener, a pitch substantially equal to about 1/6 the core diameter, and a load-bearing flank at a maximum angle of inclination from a perpendicular to the axis of the threads of about 7°.

The nonload-bearing flank is preferably at an angle of inclination of about 45° from a perpendicular to the axis of the fastener. It is also preferred to have the root between the load-bearing and nonload-bearing flanks extend axially as a surface parallel to the axis of the fastener. Preferably, the present invention has a flat at the maximum thread diameter substantially equal to 0.16 the pitch with a maximum thread diameter no more than about 0.98 the core diameter.

Thus, the present invention contemplates a modified buttress thread form that provides a low radial stress in the female fastener form threaded engagement and a smaller amount of the setting torque

2

devoted to overcoming thread friction. The thread provides uniformity in the ratio of the projection of the cross-section area of the thread onto a radial plane and the cross-section area at the core diameter of the fastener regardless of fastener size.

The present invention also contemplates a fastener system of a male and female fastener where the resistance of both fasteners to failure in shear in the threads for loads applied in an axial direction is made substantially equal by equalizing the product of the ultimate shear strength of the male fastener and the axial distance along the male thread at the failure diameter of the fastener with the product of the ultimate shear strength of the female fastener and the axial distance along the female thread at the diameter of its failure. In a practical embodiment of the present invention, the ratio of these lengths along the female and male threads is 60:40. This relationship with typical materials used in the collars and pins provides. for substantial equality in the strengths along the threads of the mating parts, for example, where the collar is made of aluminum and the pin is made of titanium.

The thread form of the present invention offers improvements over standard thread forms. Fatigue life of the fasteners is considerably better than standard "V-shaped" threads because the thread form of the invention has no notches or abrupt changes in cross-sectional area; indeed the thread root extends on an annular surface for an appreciable axial distance and there is no change in cross-sectional area here. The load-bearing flank being substantially perpendicular to the axis of the fastener results in the axial load applied to the threads being substantially the same as the total load, and as a consequence the torque required to set the fastener system is substantially less than any standard threaded configuration. This leads to at least three advantages: the driving load is reduced, the female fastener experiences markedly lower radial growth, and plastic failure of deformed threads of a thread lock is avoided. The fastener system also has a constant ratio of the thread area to the area of the fastener regardless of fastener size. This leads in smaller diameter fasteners to increased tensile strength relative to conventional "V-spaced" threads both metric and U.S.

Brief description of the figures

Figure 1 shows a screw constructed with the preferred thread form of the present invention;

Figure 2 shows a joint, partly in half-section, formed of a screw and nut both with the thread form of the present invention;

Figure 3 is a fragmentary view in cross-section of the threaded engagement of a screw and nut, each having a thread form in accordance with the present invention;

Figure 4 shows the thread form and various defining parameters; and

Figure 5 shows the thread form with additional defining parameters.

Description of the preferred embodiment

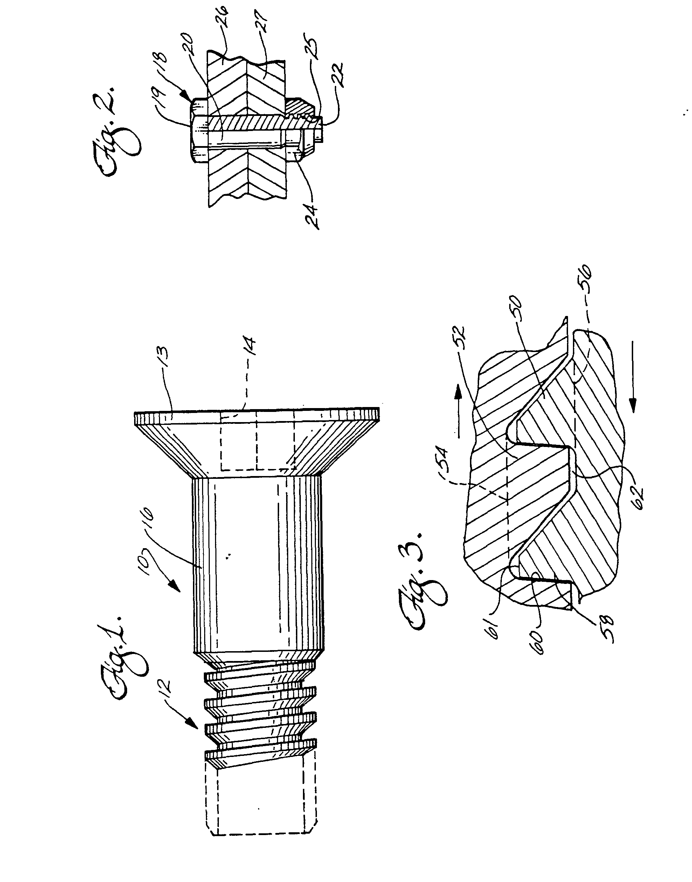

Figure 1 shows a screw 10 having a thread form 12 constructed in accordance with the present invention. In general, the screw has a head 13, a wrenching recess 14 in the head, a right cylindrical shank 16 extending from the head to the thread, and the threads.

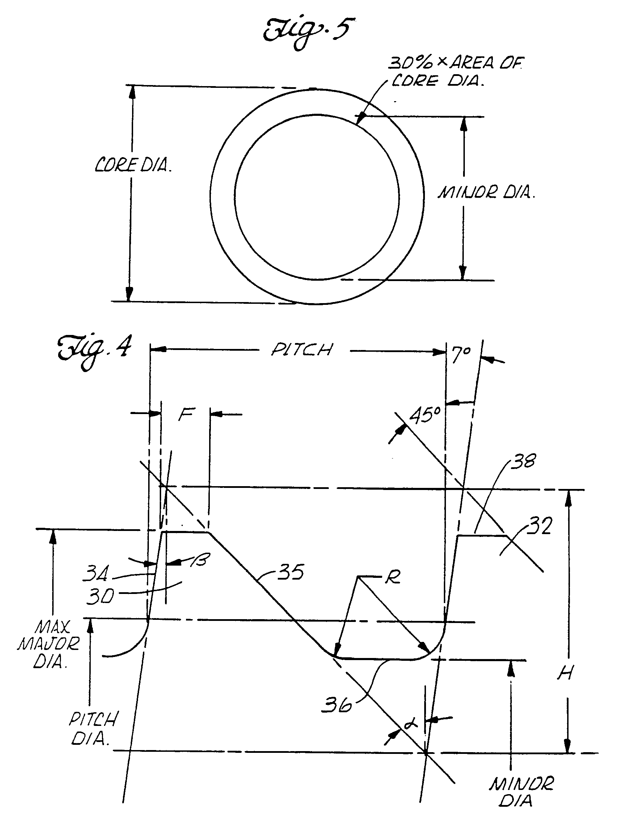

Figure 2 shows a fastener system in accordance with the present invention. It includes a screw 18 that has a protruding head 19, a right cylindrical, unthreaded shank 20 and a threaded end 22. A nut 24 having threads 25 threads onto thread 22 and clamps sheets 26 and 27 between it and head 19 of the screw.

With reference to Figure 4 and 5, the parameters that define the thread form of the present invention for a screw are shown. In Figure 4 a thread form 30 is axially adjacent a second thread form 32. A load-bearing flank 34 of thread form 30 extends almost perpendicularly to the axis of the thread and fastener. Its inclination from this perpendicular is no more than about 7°, and the inclination is indicated by the angle β. A trailing of nonload-bearing flank 35 of the thread form is inclined to a perpendicular to the axis of the fastener by an angle α, and in the preferred form angle α is about 45°. The minor or root diameter of the thread is labeled as such in Figure 4. A surface 36 extends axially parallel to the axis of the thread between thread forms 30 and 32. (The thread "form" as distinguished from the "thread" means an individual protrusion from the root diameter as seen in an axial cross-section, such as shown in Figures 3 and 4.) The thread crest, indicated at 38, is a flat extending parallel to the axis of the thread an axial distance "F." The maximum or major diameter of the thread is the diameter of the thread at and along flat 38. Pitch is the axial distance between corresponding points of two individual thread forms. Radius "R" is the radius between the nonload-bearing and load-bearing flanks and axial surface 36. "H" is the perpendicular distance to the axis of the threads in a plane of an axial cross-section from the intersection of the lines along the leading and trailing lines along a trailing flank of this thread form and leading flank of an adjacent thread form.

In the pin there is a considerable amount of material radially outward of the beginning point of "H," the material below surface 36. The presence of this material enhances the strength of the pin in both tension and fatigue because of a greater radial cross-section at the root and in fatigue because of the absence of notches and rapid changes in radial cross-sectional area.

The presence of this material below surface 36 results from the interrelationship of the parameters that will be subsequently discussed.

A characteristic of the thread form of the present invention is a relationship of areas or diameters shown in Figure 5. In Figure 5, the area of the pin devoted to the thread form measured in the cross-section

3

annulus between the minor diameter and a core diameter is equal to 30% of hhe area at the core diameter. In terms of diameters, this relationship is:

$$D_r = \sqrt{0.7\ D_c,}$$

where $D_r$ is the root or minor diameter, and $D_c$ is the core diameter.

In a pin the core diameter is the diameter at the outer radial limit of "H," that is, at the intersection of lines along the leading and trailing flanks of a thread form. "H" is equal to about 0.9P.

The table that follows shows these various defining parameters for various pin sizes.

| Size | *Core dia. (Dc) | Area of core (Ac) | 30% area (30%Ac) | Minor dia. (d) | Pitch (P), (Dc/6) | Max. maj. thd. dia. (Dm) (.9792) (core dia.) | "F" = .16316×P | "H" = Pcos αcosβ / sin (α+β) | Pitch dia. (Dp) | Max. R= P×0.10 to .15 |
|---|---|---|---|---|---|---|---|---|---|---|
| 5/32, *4 mm | .1575 | .01948 | .00584 | .13177 | .02625 | .1542/.1522 | .00428 | .02338 | .13846 | .0039/.0026 |
| *3/16, 5 mm | .1875 | .02761 | .00828 | .15687 | .03125 | .1836/.1811 | .00510 | .02783 | .16485 | .0047/.0031 |
| *6 mm | .2362 | .04382 | .01315 | .19762 | .03937 | .2313/.2285 | .00642 | .03506 | .20767 | .0059/.0039 |
| *1/4, 6.5 mm | .2500 | .04909 | .01473 | .20917 | .04167 | .2448/.2418 | .00680 | .03711 | .21980 | .0063/.0042 |
| *5/16, 8 mm | .3125 | .07670 | .02301 | .26146 | .05208 | .3060/.3020 | .00850 | .04638 | .27476 | .0078/.0052 |
| 3/8, *9.5 mm | .3740 | .10985 | .03296 | .31291 | .06233 | .3662/.3622 | .01017 | .05551 | .32883 | .0093/.0062 |
| *10 mm | .3937 | .12174 | .03652 | .32939 | .06562 | .3855/.3815 | .01071 | .05844 | .34615 | .0098/.0066 |
| 7/16, *11 mm | .4331 | .14732 | .04196 | .36236 | .07281 | .4241/.4191 | .01178 | .06429 | .38078 | .0108/.0072 |
| *12 mm | .4724 | .17527 | .05258 | .39524 | .07873 | .4626/.4576 | .01285 | .07012 | .41534 | .0118/.0079 |
| 1/2, *12.5 mm | .4921 | .19019 | .05706 | .41172 | .08202 | .4819/.4769 | .01338 | .07305 | .43264 | .0123/.0082 |
| 9/16*, 14 mm | .5512 | .23862 | .07159 | .46117 | .09187 | .5397/.5347 | .01499 | .08182 | .48462 | .0138/.0092 |
| *5/8, 16 mm | .6250 | .30680 | .09204 | .52291 | .10417 | .6120/.6060 | .01699 | .09278 | .54948 | .0156/.0104 |
| *18 mm | .7087 | .39447 | .11834 | .59294 | .11812 | .6940/.6880 | .01927 | .10520 | .62309 | .0177/.0188 |
| 3/4, *19 mm | .7480 | .43943 | .13183 | .62582 | .12467 | .7324/.7264 | .02034 | .11104 | .65763 | .0187/.0125 |
| 7/8, 22 mm | .8661 | .58915 | .17675 | .72463 | .14435 | .8481/.8411 | .02355 | .12856 | .76148 | .0217/.0144 |
| *1, 22.5 mm | 1.0000 | .78540 | .23562 | .83666 | .16667 | .9792/.9722 | .02719 | .14844 | .87919 | .0250/.0166 |

*Diameter upon which remaining values are determined, remaining values being in inches.

5

# EP 0 191 501 B1

Figure 3 illustrates in detail the relationship between the nut thread and screw thread. In the Figure, the screw thread is indicated at 50 and the nut thread is indicated at 52. Nut thread 52 has a root 54; screw thread 50 has a root 56. The distance along the nut thread at any radial point is greater than the distance along the screw thread at the corresponding radial point; for example, at roots 54 and 56. In the preferred form of the present invention, the corresponding ratios of the distances across these points are,

$$1_f : 1_m = 60:40,$$

where, $1_f$ is equal to the length along the collar, and $1_m$ is equal to the length along the pin. In the usual aerospace application, the nut is made of material softer than the screw. By increasing the corresponding axial thickness of the nut thread with respect to the screw thread, the two can be made substantially equal in strength, thus optimizing a joint performance of the two threads in resisting axial shear along the threads, say at root 54 of the nut.

With the pitch equal to 1/6 the core diameter, and with the projected area of the male thread to the area of the core being 30%, the distance across the female flat is substantially greater than the distance along the male flat, as can be seen in Figure 3, with the female flat being shown at 61 and the male flat being shown at 64. This is symptomatic of the greater axial length at corresponding points throughout the female thread form with respect to the axial length of the male thread form.

As can be seen in Figure 3, loads are applied to the thread forms through the load-bearing faces 58 and 60 of the thread forms. This type of loading corresponds to tensile loading of a fastener, and is a typical type of loading experienced in a joint such as shown in Figure 2. There, the reaction force of the sheets 26 and 27 to the clamp-up load on them placed by head 19 and nut 24 is a tensile force applied to the screw and to the threads of the nut. The trailing flanks of the thread forms bear no load at all, and a clearance exists between these flanks. In the aerospace industry, this clearance corresponds to a Type 3 fit, and that is the preferred fit for the fastener system of this invention. The loading along the load-bearing flanks of the threads is essentially axial with no radial component. Accordingly, the nut has no material hoop stress in it resulting from this loading. This means that the nut will not expand because of hoop stress with the result that a nut can be made comparatively lightweight without the loss of the thread lock function of deformed threads; the nut threads not experiencing material hoop stress cannot fail plastically and destroy the acircular thread form required for many thread locks.

Another significant advantage of load transmission through substantially vertical faces of cooperating thread forms is a reduction in the setting torque. A "V-shaped" thread form has a considerably greater load between the engaged flanks of the thread then does the thread of the present invention; with this greater loading there is a corresponding increase in friction. This friction must be overcome in setting the fastener system with the result that the drive load is higher in a fastener with a "V-shaped" thread form than one with the modified buttress thread form of this invention.

Stated differently, in the thread form of the present invention, the load along the axis of the fastener with the thread form corresponds essentially to the load applied to the sheets. In a conventional "V-shaped" fastener having a 60° included angle, the load imposed by a given axial load that produces friction between the thread form is proportional to the axial load divided by the sine of 60°. The radial stress is proportional to the axial stress times the cotangent of 60°.

The angle of the load flank of the thread to the perpendicular is preferably no greater than about 7°, and preferably less. There must be some angle to the perpendicular to accommodate thread roll dies. The angle of the nonload-bearing flank to the perpendicular from the axis of the thread is preferably 45°, but it may be a little less for the screw if more material is desired in the female thread form to compensate for a greater strength in the male thread form.

The provision of axially extending surface 36 at the root of the thread means that a large radius, "R," between the surface and the leading and trailing flanks is possible. With the large radius goes improved fatigue strength. The flat at 38 is dictated by the provision of more material across the root diameter of the female fastener than would otherwise be possible. In short, by not having the male thread form go to a point, it is possible to increase the root diameter of the female thread, and that is done.

## Claims

1. An externally threaded fastener (10, 18) adapted to be used in combination with an internally threaded fastener, said externally threaded fastener having a buttress type thread (50, 52) which has a load-bearing flank (34, 58) and a nonload-bearing flank (35) and which comprises:

(a) $D_r$ being substantially equal to $\sqrt{0.7}\, D_c$,

(b) P being substantially equal to 1/6 $D_c$, and

(c) the load bearing flank (34, 58) being inclined at a maximum angle of inclination of about 7° from the perpendicular to the axis of the fastener, where

$D_r$ = root diameter of the thread,

$D_c$ = core diameter of the fastener, and

P = the pitch of the thread.

6

2. The fastener claimed in claim 1 wherein the root (36, 56) of the thread extends axially as a surface parallel to the axis of the fastener.

3. The fastener claimed in claim 1 or 2 wherein the nonload-bearing flank (35) is at an angle of inclination of about 45° from the perpendicular to the axis of the fastener.

4. The fastener claimed in any of claims 1 to 3 wherein the maximum thread diameter is no more than about 0.98 $D_c$ and the thread has a flat (38, 61) at the maximum thread diameter of about 0.16P.

5. The fastener claimed in any of claims 1 to 4 including a radius R between the load-bearing flank (34, 58) and the root (36, 56) and between the nonload-bearing flank (35) and the root (36, 56), each of the radii being between about 0.1P and 0.15P.

6. A combination of an externally threaded fastener (18) of any of claims 1 to 5 and an internally threaded fastener (24) both with a buttress type thread (50, 52), wherein the thread form of both the externally and internally threaded fasteners provides substantially equal strength of both fasteners in resistance to failure in shear in the threads of each from loads in the axial direction by substantial equalization of the following relationship:

$$\tau_m l_m = \tau_f l_f$$

where,

$\tau_m$=ultimate shear strength of the externally threaded fastener (18),

$l_m$=axial distance along the external thread (50) at the diameter of its failure in shear in the axial direction,

$\tau_f$=ultimate shear strength of the internally threaded fastener (24) and,

$l_f$=axial distance along the internal thread (52) at its diameter of failure in shear in the axial direction.

7. The combination claimed in claim 6 wherein $l_f : l_m$ is substantially equal to 60:40.

8. The combination claimed in claim 6 or 7 wherein $\tau_m : \tau_f$ is substantially equal to 60:40.

9. The combination claimed in any of claims 6 to 8 wherein the externally threaded fastener (18) is formed from a stronger material than the internally threaded fastener (24).

10. The combination of any of claims 1 to 9 wherein H is about 0.9P, where H=the distance as seen in axial cross-ection of a radius to the axis of the fastener from the intersection of lines drawn along the load-bearing (35) and nonload-bearing (34, 58, 60) flanks of an individual thread form to the intersection of lines drawn along the nonload-bearing flank of a preceding thread form and the load-bearing flank of the individual thread form.

**Patentansprüche**

1. Befestigungsteil (10, 18) mit einem Außengewinde zur Verwendung in einer Verbindung mit einem Befestigungsteil mit Innengewinde, wobei das Befestigungsteil mit Außengewinde ein Sägezahngewinde (50, 52) mit einer lastaufnehmenden Flanke (34, 58) und einer nicht lastaufnehmenden Flanke (35) aufweist, wobei:

(a) $D_r$ im wesentlichen gleich $\sqrt{0.7}\ D_c$ ist,

(b) P im wesentlichen gleich 1/6 $D_c$ ist, und

(c) die lastaufnehmende Flanke (34, 58) unter einem maximalen Neigungswinkel von etwa 7° aus der Lotrechten zur Achse des Befestigungsteils geneigt ist, wobei

$D_r$=der Wurzeldurchmesser des Gewindes,

$D_c$=der Kerndurchmesser des Befestigungsteils, und

P=die Steigung des Gewindes ist.

2. Befestigungsteil nach Anspruch 1, bei dem sich die Wurzel (36, 56) des Gewindes in Axialrichtung als parallel zur Achse des Befestigungsteils verlaufende Fläche erstreckt.

3. Befestigungsteil nach Anspruch 1 oder 2, bei dem die nicht lastaufnehmende Flanke (35) unter einem Neigungswinkel von etwa 45° von der Lotrechten zur Achse des Befestigungsteils verläuft.

4. Befestigungsteil nach einem der Ansprüche 1 bis 3, bei dem der maximale Gewindedurchmesser nicht größer als etwa 0,98 $D_c$ ist, und das Gewinde am maximalen Gewindedurchmesser eine Abflachung (38, 61) von etwa 0,16 P hat.

5. Befestigungsteil nach einem der Ansprüche 1 bis 4 mit einem Radius R zwischen der lastaufnehmenden Flanke (34, 58) und der Wurzel (36, 56) sowie zwischen der nicht lastaufnehmenden Flanke (35) und der Wurzel (36, 56), wobei jeder der Radien zwischen 0,1 P und 0,15 P ist.

6. Verbindung zwischen einem mit Außengewinde versehenen Befestigungsteil (18) nach einem der Ansprüche 1 bis 5, und einem mit Innengewinde versehenen Befestigungsteil (24), wobei beide ein Gewinde (50, 52) vom Sägezahntyp aufweisen, bei der die Gewindeform der Befestigungsteile sowohl mit dem Außen- als auch mit dem Innengewinde eine im wesentlichen gleiche Festigkeit beider Befestigungsteile hinsichtlich des Widerstandes gegen Versagen durch Scherung in beiden Gewinden durch Kräfte in Axialrichtung durch die Erfüllung der folgenden Bedingung bewirkt.

$$\tau_m l_m = \tau_f l_f$$

7

wobei

$\tau_m$=größte Scherfestigkeit des mit Außengewinde versehenen Befestigungsteils (18),

$I_m$=der Axialabstand entlang des Außengewindes (50) am Durchmesser des Versagens durch Scherkräfte in Axialrichtung,

$\tau_f$=die größte Scherfestigkeit des mit Innengewinde versehenen Befestigungsteils (24) und

$I_f$=der Axialabstand entlang des Innengewindes (52) am Durchmesser des Versagens durch Scherkräfte in der Axialrichtung.

7. Verbindung nach Anspruch 6, bei der $I_f:I_m$ im wesentlichen gleich 60:40 ist.

8. Verbindung nach Anspruch 6 oder 7, bei der $\tau_m:\tau_f$ im wesentlichen gleich 60:40 ist.

9. Verbindung nach einem der Ansprüche 6 bis 8, bei der das mit Außengewinde versehene Befestigungsteil (18) aus einem festeren Material als das mit Innengewinde versehene Befestigungsteil (24) gebildet ist.

10. Verbindung nach einem der Ansprüche 1 bis 9, bei der H etwa 0,9 P ist, wobei H=der Abstand, gesehen im axialen Querschnitt eines Radius zur Achse des Befestigungsteils, von dem Schnittpunkt von Linien, fie entlang der lastaufnehmenden (35) und der nicht lastaufnehmenden (34, 58, 60) Flanken eines einzelnen Gewindeganges gezogen wurden, bis zum Schnittpunkt der Linien, die entlang der nicht lastaufnehmenden Flanke eines vorangegangenen Gewindegangs und der lastaufnehmenden Flanke des einzelnen Gewindeganges gezogen wurden, ist.

## Revendications

1. Elément de fixation fileté extérieurement (10, 18) adapté à être utilisé en association avec un élément de fixation fileté intérieurement, ledit élément de fixation fileté extérieurement ayant un filetage en dent de scie (50, 52) présentant un flanc porteur (34, 58) et un flanc non porteur (35),

(a) $D_r$ étant sensiblement égal à $\sqrt{0,7}\ D_c$,

(b) P étant sensiblement égal à 1/6 $D_c$, et

(c) le flanc porteur (34, 58) étant incliné d'un angle d'inclinaison maximum d'environ 7° par rapport à la perpendiculaire à l'axe de l'élément de fixation, où:

$D_r$=diamètre de base du filet,

$D_c$=diamètre d'âme de l'élément de fixation, et

P=pas de filetage.

2. Elément de fixation selon la revendication 1, caractérisé en ce que la base (36, 56) du filet s'étend axialement suivant une surface parallèle à l'axe de l'élément de fixation.

3. Elément en fixation selon la revendication 1 ou 2, caractérisé en ce que le flanc non porteur (35) est incliné d'environ 45° par rapport à la perpendiculaire à l'axe de l'élément de fixation.

4. Elément de fixation selon l'une quelconque des revendications 1 à 3, caractérisé en ce que le diamètre maximum du filet ne dépasse pas environ 0,98 $D_c$ et en ce que le filet présente une partie plate (38, 61) d'environ 0,16 P à la hauteur du diamètre maximum du filet.

5. Elément de fixation selon l'une quelconque des revendications 1 à 4, caractérisé en ce qu'il présente un rayon de courbure R entre le flanc porteur (34, 58) et l'âme (36, 56) et entre le flanc non porteur (35) et l'âme (36, 56), chacun des rayons de courbure étant compris entre environ 0,1 P et 0,15 P.

6. Combinaison d'un élément de fixation fileté extérieurement (18) selon l'une quelconque des revendications 1 à 5 et d'un élément de fixation fileté intérieurement (24) présentant sous deux un filetage en dent de scie (50, 52), caractérisée en ce que la forme de filet des éléments de fixation filetés extérieurement et intérieurement confère aux deux éléments de fixation des solidités sensiblement égales en ce qui concerne la résistance à la rupture des filets par cisaillement provoquée par des charges appliquées dans la direction axiale, lorsque l'égalité suivante est sensiblement vérifiée:

$$\tau_m I_m = \tau_f I_f$$

où:

$\tau_m$=résistance maximale au cisaillement de l'élément de fixation fileté extérieurement (18),

$I_m$=distance axiale le long du filet externe (50) à la hauteur du diamètre de sa rupture par cisaillement dans la direction axiale,

$\tau_c$=résistance maximale au cisaillement de l'élément de fixation fileté intérieurement (24), et

$I_f$=distance axiale le long du filet interne (52) à la hauteur du diamètre de sa rupture par cisaillement dans la direction axiale.

7. Combinaison selon la revendication 6, caractérisée en ce que $I_f:I_m$ est sensiblement égal à 60:40.

8. Combinaison selon la revendication 6 ou 7, caractérisée en ce que $\tau_m:\tau_f$ est sensiblement égal à 60:40.

9. Combinaison selon l'une quelconque des revendications 6 à 8, caractérisée en ce que l'élément de fixation fileté extérieurement (18) est réalisé à partir d'un matériau plus résistant que l'élément de fixation· fileté intérieurement (24).

10. Combinaison selon l'une quelconque des revendications 1 à 9, caractérisée en ce que H haut environ 0,9 P, H étant la longueur vue en coupe axiale d'un rayon partant de l'axe de l'élément de fixation et joignant l'intersection de droites tracées le long des flancs porteur (35) et non porteur (34, 58, 60) d'une forme de filet individuelle à l'intersection de droites tracées le long du flanc non porteur d'une forme de filet précédente et du flanc porteur de la forme de filet individuelle.

Fig. 2.

19 18 20 26 27 25 22 24

Fig. 1.

13 14 10 16 12

Fig. 3.

52 50 56 54 62 61 60 58

*Fig. 5*

30% × AREA OF
CORE DIA.

CORE DIA.

MINOR DIA.

*Fig. 4*

PITCH

7°

F

45°

38

32

34
B
35
R
30

MAX
MAJOR
DIA.

36
α
H

PITCH
DIA.

MINOR
DIA

2